# EUROPEAN PATENT APPLICATION

(11) **EP 4 572 255 A1**
(43) Date of publication of application: **18.06.2025**
(21) Application number: 22954464.8
(22) Date of filing: 10.08.2022
(51) Int. Cl.: H04L 27/00

(54) **INFORMATION PROCESSING METHOD, APPARATUS, COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LU, Wei, Beijing 100085 (CN)
(74) Representative: Stöckeler, Ferdinand
(86) International application number: PCT/CN2022/111592
(87) International publication number: WO 2024/031493

(57) **Abstract**

Provided in the embodiments of the present disclosure are an information processing method, an apparatus, a communication device and a storage medium. A control plane network element receives a query request which is sent by an access and mobility management function (AMF) network element serving a third-party terminal, wherein the query request contains application layer identifiers of terminals used for ranging and/or sidelink positioning, and the terminals comprise a target terminal and a reference terminal; and, according to the mapping relationship between the application layer identifiers of the terminal and subscriber permanent identifiers (SUPIs), returning to the AMF SUPIs corresponding to the application layer identifiers of the terminals, wherein the SUPIs are used for processing signaling, data flows or user information related to the ranging and/or sidelink positioning of the target terminal and of the reference terminal.

## Description

### TECHNICAL FIELD

The disclosure relates to, but is not limited to, the field of wireless communication technologies, and particularly to a method and an apparatus for processing information, a communication device and a storage medium.

### BACKGROUND

Ranging refers to determining a distance between two user equipments (UEs) or more UEs, and/or a direction and/or position of one UE (i.e. target UE) from another UE (i.e. reference UE) by a PC5 interface.

A ranging service between two UEs may be triggered by and exposed to a third party UE.

The third party UE may send a request to and receive a corresponding result from a UE subject to ranging/sidelink (SL) positioning by a direct communication or a 5th generation core (5GC) network.

In a 5GC, a subscription permanent identifier (SUPI) is used to identify the UE to store and retrieve subscription data, a profile and context data of the UE, and used to route a signaling or traffic related to the UE. However, an SUPI value of the reference UE and an SUPI value of the target UE may not be exposed to the third party UE.

For the case where the third party UE has to send a ranging/SL positioning service request to the target UE or the reference UE via the 5GC, it is a problem on how an identifier of the target UE and an identifier of the reference UE provided by the third party UE are understood and used in the 5GC.

### SUMMARY

Embodiments of the disclosure provide a method and an apparatus for processing information, a communication device and a storage medium.

A first aspect of embodiments of the disclosure provides a method for processing information, performed by a control plane network element. The method includes:
receiving a query request sent by an access and mobility management function (AMF) network element that serves a third party user equipment (UE), in which the query request includes an application layer identifier (ID) of a UE for ranging/sidelink (SL) positioning, in which the UE includes a target UE and a reference UE; and
returning a subscriber permanent identifier (SUPI) corresponding to the application layer ID of the UE to the AMF based on a mapping relationship between the application layer ID and the SUPI of the UE, in which the SUPI is used to process a signaling, traffic, or user information related to the ranging/SL positioning between the target UE and the reference UE.

In an embodiment, the method also includes:
establishing the mapping relationship between the application layer ID and the SUPI of the UE based on configuration of an operator; or,
establishing the mapping relationship between the application layer ID and the SUPI of the UE based on registration of the UE.

In an embodiment, there is a one-to-one mapping relationship or a many-to-one mapping relationship between an application layer ID and an SUPI of the same UE.

In an embodiment, establishing the mapping relationship between the application layer ID and the SUPI of the UE based on the registration of the UE includes at least one of:
establishing the mapping relationship between the application layer ID of the UE and the SUPI of the UE based on a registration request message sent by the UE during the registration of the UE, in which the registration request message includes one or more application layer IDs of the UE with respect to different applications; or
establishing the mapping relationship between the application layer ID of the UE and the SUPI of the UE based on a UE policy container sent by the UE during a UE policy association establishment, in which the UE policy container includes one or more application layer IDs of the UE with respect to different applications.

In an embodiment, the control plane network element includes:
a gateway mobile location center (GMLC) network element;
   or,
a network exposure function (NEF) network element;
   or,
a policy control function (PCF) network element.

A second aspect of embodiments of the disclosure provides a method for processing information, performed by an AMF network element that serves a third party UE. The method includes:
sending a query request to a control plane network element, in which the query request includes an application layer ID of a UE for ranging/SL positioning, in which the UE includes a target UE and a reference UE; and
receiving an SUPI corresponding to the application layer ID of the UE returned by the control plane network element based on a mapping relationship between the application layer ID and the SUPI of the UE, in which the SUPI is used to process a signaling, traffic, or user information related to the ranging/SL positioning between the target UE and the reference UE.

In an embodiment, there is a one-to-one mapping relationship or a many-to-one mapping relationship between an application layer ID and an SUPI of the same UE.

In an embodiment, before sending the query request to the control plane network element, the method further includes:
receiving a first service request sent by the third party UE, in which the first service request includes an application layer ID of the target UE and an application layer ID of the reference UE.

In an embodiment, the method also includes:
sending a second service request to an AMF network element that serves the target UE or the reference UE, in which the second service request includes the application layer ID of the target UE, the application layer ID of the reference UE, an SUPI of the target UE and an SUPI of the reference UE.

In an embodiment, the method further includes:
receiving a service request response returned by the AMF that serves the target UE or the reference UE; and
forwarding the service request response to the third party UE, in which the service request response includes a ranging/SL positioning result of the target UE and the reference UE that is allowed to be provided to the third party UE.

In an embodiment, the control plane network element includes:
a GMLC network element;
   or,
an NEF network element;
   or,
a PCF network element.

A third aspect of embodiments of the disclosure provides an apparatus for processing information, applied to a control plane network element, including:
a receiving module, configured to receive a query request sent by an AMF network element that serves a third party UE, in which the query request includes an application layer ID of a UE for ranging/SL positioning, in which the UE includes a target UE and a reference UE; and
a sending module, configured to return an SUPI corresponding to the application layer ID of the UE to the AMF based on a mapping relationship between the application layer ID and the SUPI of the UE, in which the SUPI is used to process a signaling, traffic, or user information related to the ranging/SL positioning between the target UE and the reference UE.

A fourth aspect of embodiments of the disclosure provides an apparatus for processing information, applied to an AMF network element that serves a third party UE, including:
a sending module, configured to send a query request to a control plane network element, in which the query request includes an application layer ID of a UE for ranging/SL positioning, in which the UE includes a target UE and a reference UE; and
a receiving module, configured to receive an SUPI corresponding to the application layer ID of the UE returned by the control plane network element according to a mapping relationship between the application layer ID and the SUPI of the UE, in which the SUPI is used to process a signaling, traffic, or user information related to the ranging/SL positioning between the target UE and the reference UE.

A fifth aspect of embodiments of the disclosure provides a communication system, including:
a control plane network element, configured to implement the method for processing information of any one of the first aspect; and
an AMF network element, configured to implement the method for processing information of any one of the second aspect.

A sixth aspect of embodiments of the disclosure provides a communication device, including:
a processor; and
a memory for storing instructions executable by the processor.

The processor is configured to implement the method for processing information of any one of the first aspect or the second aspect when executing the executable instructions.

A seventh aspect of embodiments of the disclosure provides a computer storage medium for storing a computer executable program. When the executable program is executed by a processor, the method for processing information of any one of the first aspect or the second aspect is implemented.

With a technical solution in embodiments of the disclosure, the control plane network element receives the query request sent by the AMF network element that serves the third party UE, and returns the SUPI of the target UE and the SUPI of the reference UE for the query request of the AMF network element to the AMF network element based on the mapping relationship between the application layer ID and the SUPI of the UE. Thus, for the case where the third party UE has to send a ranging service request to the target UE or the reference UE via a 5GC, the SUPI of the target UE and the SUPI of the reference UE may be used to understand and use an identifier of the target UE and an identifier of the reference UE provided by the third party UE, to implement processing the signaling and data related to the ranging/SL positioning of the target UE and the reference UE.

It may be understood that a general description above and a detailed description below are illustrative and explanatory, which do not limit embodiments of the disclosure.

### BRIEF DESCRIPTION OF THE DRAWINGS

The accompanying drawings, which are incorporated in the specification and constitute a part of this specification, illustrate embodiments consistent with the disclosure and, together with the description, serve to explain the principles of embodiments of the disclosure.
FIG. 1 is a schematic diagram illustrating a wireless communication system according to an exemplary embodiment.
FIG. 2 is a schematic diagram illustrating a UE providing a ranging service in different scenarios according to an exemplary embodiment.
FIG. 3 is a flow chart illustrating a method for processing information according to an exemplary embodiment.
FIG. 4 is a flow chart illustrating a method for processing information according to an exemplary embodiment.
FIG. 5 is a flow chart illustrating a method for processing information according to an exemplary embodiment.
FIG. 6 is a flowchart of a method for processing information according to an exemplary embodiment.
FIG. 7 is a flow chart illustrating a method for processing information according to an exemplary embodiment.
FIG. 8 is a flow chart illustrating a method for processing information according to an exemplary embodiment.
FIG. 9 is a block diagram illustrating an apparatus for processing information according to an exemplary embodiment.
FIG. 10 is a block diagram illustrating an apparatus for processing information according to an exemplary embodiment.
FIG. 11 is a block diagram illustrating a communication device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different accompanying drawings represent the same or similar elements unless otherwise represented. The implementations set forth in the following description of exemplary embodiments do not represent all implementations consistent with embodiments of the disclosure. Instead, they are merely examples of apparatuses and methods consistent with aspects related to embodiments of the disclosure.

The terms used in the embodiments of the disclosure are merely for the purpose of describing a particular embodiment and are not intended to limit the embodiments of the disclosure. The terms "a/an" and "the" in the singular form used in the disclosure are also intended to include the plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the disclosure, such information should not be limited to these terms. These terms are used only to distinguish information in the same type from one another. For example, without departing from the scope of the embodiments of the disclosure, the first parameter may also be referred to as the second parameter, and similarly, the second parameter may be referred to as the first parameter. Depending on the context, words "if" and "in the case that" used here may be interpreted as "when", "while", or "in response to determining...".

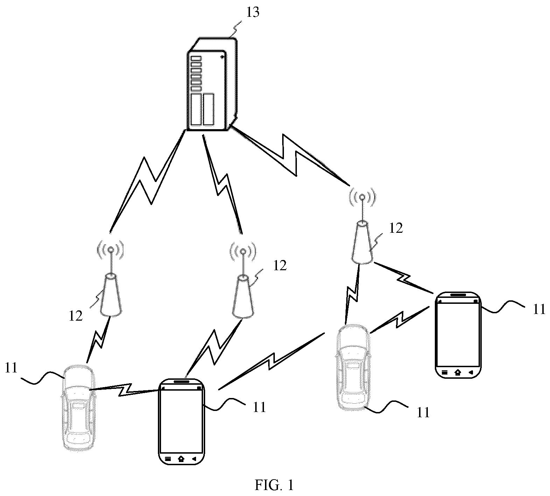

Please refer to FIG. 1, which is a schematic diagram illustrating a wireless communication system according to an embodiment of the disclosure. As illustrated in FIG. 1, the wireless communication system is a communication system based on a cellular mobile communication technology, and the wireless communication system may include: several user equipments (UEs) 11 and several access devices 12.

The UE 11 may be a device that provides speech and/or data connectivity to a user. The UE 11 may communicate with one or more core networks via a radio access network (RAN). The UE 11 may be an Internet of Things (IoT) UE, such as a sensor device, a mobile phone (or a "cellular" phone), and a computer with the IoT UE. For example, the UE may be a fixed, portable, pocket, handheld, computer built-in or vehicle-mounted device, For example, the UE may be a station (STA), a subscriber unit, a subscriber station, a mobile station, a mobile, a remote station, an access point, a remote terminal, an access terminal, a user terminal, a user agent, a user device, or a UE. Alternatively, the UE 11 may be a device for an unmanned aerial vehicle (UAV). Alternatively, the UE 11 may also be a vehicle-mounted device, such as, a driving computer with a wireless communication function, or a wireless communication device with an external driving computer. Alternatively, the UE 11 may be a roadside device, such as a street lamp, a signal lamp or other roadside devices with the wireless communication function.

The access device 12 may be a network device in the wireless communication system. The wireless communication system may be a 4th generation mobile communication technology (4G) system, also known as a long term evolution (LTE) system. Alternatively, the wireless communication system may also be a 5th generation mobile communication technology (5G) system, also known as a new radio (NR) system or a 5G NR system. Alternatively, the wireless communication system may also be a next generation system of the 5G system. An access network in the 5G system may be called a new generation-radio access network (NG-RAN) or a machine-type communication (MTC) system.

The access device 12 may be an evolved Node B (eNB) in the 4G system, or a next generation node (gNB) that employs a centralized distributed architecture in the 5G system. When the access device 12 employs the centralized distributed architecture, the access device 12 usually includes a central unit (CU) and at least two distributed units (DUs). The CU is provided with a protocol stack of a packet data convergence protocol (PDCP) layer, a radio link control (RLC) layer, and a medium access control (MAC) layer. The DU is provided with a protocol stack of a physical (PHY) layer. A detailed implementation of the access device 12 is not limited in the embodiments of the disclosure.

A wireless connection may be established between the access device 12 and the UE 11 via a wireless radio interface. In different implementations, the wireless radio interface may be a wireless radio interface based on a 4G standard. Alternatively, the wireless radio interface may be a wireless radio interface based on a 5G standard, for example, the wireless radio interface may be the new radio interface. Alternatively, the wireless radio interface may also be a wireless radio interface based on a next generation of a mobile communication network technology standard based on the 5G.

In an embodiment, an end to end (E2E) connection or a device to device (D2D) connection may also be established between the UEs 11, such as, a vehicle to vehicle (V2V) communication, a vehicle to infrastructure (V2I) communication, a vehicle to pedestrian (V2P) communication and other scenario in a vehicle to everything (V2X) communication.

In an embodiment, the network device 12 may be located in a communication system that is integrated with a satellite communication system and is capable of providing a connection service to a satellite, and may connect the satellite to a core network. For example, the network device 12 may be an access network device with a satellite gateway function in the communication system, such as a gateway device, a ground station device, a non-terrestrial networks gateway (NTN-Gateway), etc.

In an embodiment, the wireless communication system may also include a core network device 13. Several network devices 12 are respectively connected to the core network device 13.

In an embodiment, the core network device 13 may be a mobility management entity (MME) in an evolved packet core (EPC). Alternatively, the core network device may also be a serving GateWay (SGW), a public data network GateWay (PGW), a policy and charging rules function (PCRF), or a home subscriber server (HSS). The implementation form of the core network device 13 is not limited in the embodiments of the disclosure.

In an embodiment, the core network device 13 may be an access and mobility management function (AMF), a unified data management (UDM), or a gateway mobile location center (GMLC); a network exposure function (NEF) network element; or a policy control function (PCF) network element. The implementation form of the core network device 13 is not limited in the embodiments of the disclosure.

The AMF, the GMLC, the NEF, the PCF, etc. in embodiments of the disclosure may be implemented by a single physical device or implemented together by multiple physical devices. It may be understood that the AMF, the GMLC, the NEF, the PCF, etc. in embodiments of the disclosure may be a logical function module within the physical device, or may be a logical function module combined by the multiple physical devices, which is not limited in the embodiments of the disclosure.

In order to facilitate the understanding of those skilled in the art, multiple implementations are listed in the embodiments of the disclosure to clearly illustrate the technical solution of the embodiments of the disclosure. Of course, those skilled in the art may understand that multiple embodiments in the embodiments of the disclosure may be executed individually or may be executed in combination with a method of another embodiment in the embodiments of the disclosure, or may be executed individually or in combination with some methods in other related arts, which is not limited in the embodiments of the disclosure.

Description is made below to some of terms of embodiments of the disclosure, to facilitate the understanding of functions by those skilled in the art.

Ranging refers to determining a distance between two UEs or more UEs, and/or a direction and/or position of one UE (i.e. target UE) from another UE (i.e. reference UE) by a PC5 interface.

Sidelink (SL) positioning is to position a UE by a PC5.

The reference UE: a UE which determines a reference plane and a reference direction in a ranging based service and the SL positioning.

The target UE: a UE of which distance, direction and/or position is measured comparing to a reference plane, a reference direction and/or a location of the reference UE in the ranging based service and the SL positioning.

An assistant UE: a UE for providing assistance for ranging/SL positioning when direct ranging/SL positioning between the reference UE and the target UE is not supported.

A located UE: a UE which obtains or can obtain a location of the UE by Uu-based positioning. The located UE may be configured to determine a location of the target UE using the SL positioning.

A location server UE: a UE for providing a location server functionality instead of a location management function (LMF) and for the SL positioning and ranging by the SL. The location server UE needs to interact with the target UE, the reference UE, the assistant UE and the located UE to calculate the location of the target UE.

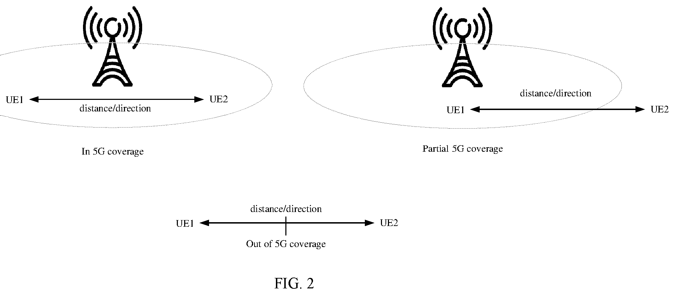

A ranging and SL positioning service is supported with or without 5G coverage. FIG. 2 is a schematic diagram illustrating a UE providing a ranging service in different scenarios. FIG. 2 illustrates the UE providing the ranging service in different scenarios with the 5G coverage, with partial 5G coverage, or without the 5G coverage. If a licensed band is used to ranging, the licensed band may be fully controlled by an operator.

The ranging service between two UEs may be triggered by and exposed to a third party UE.

The third party UE may send a request to and receive a corresponding result from a UE subject to the ranging/SL positioning by a direct communication or a 5th generation core (5GC) network.

In a 5GC, a subscription permanent identifier (SUPI) is used to identify the UE to store and retrieve subscription data, a profile and context data of the UE, and used to route a signaling or traffic related to the UE. However, an SUPI value of the reference UE and an SUPI value of the target UE may not be exposed to the third party UE.

For the case where the third party UE has to send the ranging/SL positioning service request to the target UE or the reference UE via the 5GC, it is a problem on how an identifier of the target UE and an identifier of the reference UE provided by the third party UE are understood and used in the 5GC.

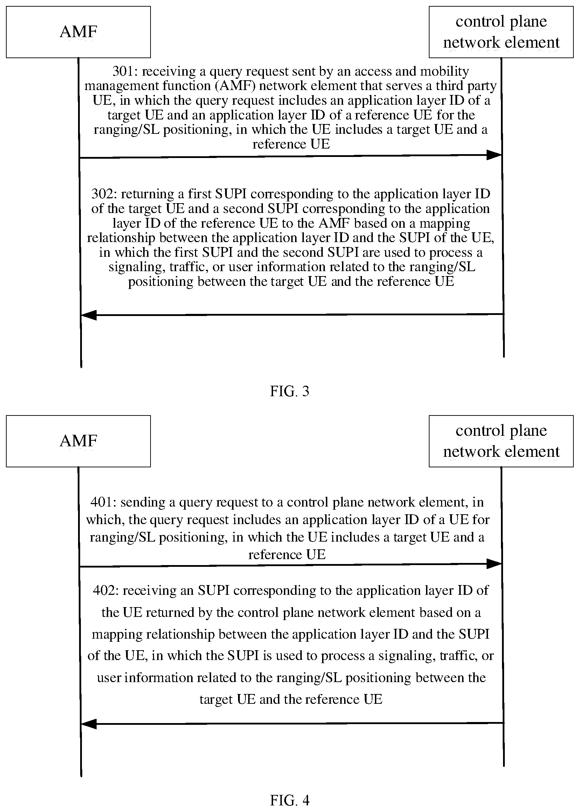

FIG. 3 is a flow chart illustrating a method for processing information according to an exemplary embodiment. The method for processing information is performed by a control plane network element. As illustrated in FIG. 3, the method includes the following.

At step 301, a query request sent by an AMF network element that serves a third party UE is received, in which the query request includes an application layer identifier (ID) of a UE for ranging/SL positioning, in which the UE includes a target UE and a reference UE.

At step 302, an SUPI corresponding to the application layer ID of the UE is returned to the AMF based on a mapping relationship between the application layer ID and the SUPI of the UE, in which the SUPI is used to process a signaling, traffic, or user information related to the ranging/SL positioning between the target UE and the reference UE.

The UE participating in the ranging/SL positioning includes the target UE and the reference UE. The target UE and the reference UE may switch roles in the same ranging/SL positioning session.

The UE participating in the ranging/SL positioning includes a first UE and a second UE. The first UE may be the target UE, and the second UE may be the reference UE. Alternatively, the first UE may be the reference UE, and the second UE may be the target UE.

The third party UE may be a UE different from the target UE and the reference UE. The third party UE may request to obtain a ranging/SL positioning result of the target UE and the reference UE.

For example, in the case that a certain vehicle acting as the third party UE needs to obtain a relative location between two vehicles near the vehicle, the vehicle may initiate a service request to an AMF that serves the vehicle, to obtain the relative location between the two vehicles.

The AMF that serves the third party UE refers to a serving AMF of the third party UE.

In some examples, the AMF that serves the third party UE, an AMF that serves the target UE and an AMF that serves the reference UE may be the same or different.

In another example, the AMF that serves the third party UE may be the same as the AMF that serves the target UE, and the AMF that serves the third party UE may be different from the AMF that serves the reference UE.

In a still another example, the AMF that serves the third party UE may be the same as the AMF that serves the reference UE, and the AMF that serves the third party UE may be different from the AMF that serves the target UE.

The AMF that serves the third party UE may send the query request to the control plane network element, such as a GMLC network element, when receiving the service request sent by the third party UE. The query request includes an application layer ID of the target UE for the ranging/SL positioning and an application layer ID of the reference UE for the ranging/SL positioning.

In some examples, the control plane network element may be the GMLC network element, an NEF network element, or a PCF network element.

The control plane network element stores the mapping relationship between the application layer ID and the SUPI of the UE in advance. There may be a one-to-one mapping relationship or a many-to-one mapping relationship between the application layer ID and the SUPI of the UE. It may be understood that the control plane network element may obtain the mapping relationship between the application layer ID and the SUPI of the UE in another way, which is not limited in the disclosure.

The application layer ID of the UE is used for the ranging/SL positioning.

There may be one or more application layer IDs of one UE, and an application layer ID of one UE respectively correspond to an application of the UE. The same application corresponds to different application layer IDs in different UEs.

The SUPI of the UE is a unique identifier assigned to each UE by a network operator in a wireless communication system.

The control plane network element may establish a mapping relationship between one or more application layer IDs and the SUPI of the UE in advance.

The SUPI of the UE is used to process the signaling, the traffic, or the user information related to the ranging/SL positioning between the target UE and the reference UE.

The signaling related to the ranging/SL positioning between the target UE and the reference UE is carried by a control plane. For example, the signaling may be: a signaling carrying the service request, and/or a signaling carrying a service request response. The service request is used to request to obtain the ranging/SL positioning result of the target UE and the reference UE.

The traffic related to the ranging/SL positioning between the target UE and the reference UE is carried by a user plane.

The user information related to the ranging/SL positioning between the target UE and the reference UE may include: contract information, user privacy information and/or temporary information stored by the AMF that serves the target UE and the reference UE, etc.

In this embodiment, the control plane network element obtains the application layer ID of the target UE and the application layer ID of the reference UE in the query request when receiving the query request initiated by the AMF that serves the third party UE; determines whether an SUPI of the target UE and an SUPI of the reference UE exist by querying the mapping relationship between the application layer ID and the SUPI of the UE; and if yes, returns a response result indicating that a query succeeds to the AMF, in which, the response result includes the SUPI of the target UE and the SUPI of the reference UE.

If the SUPI corresponding to the application layer ID of the target UE and/or the SUPI corresponding to the application layer ID of the reference UE is not queried, a response result indicating that the query fails may be returned to the AMF.

With the method for processing information in embodiments of the disclosure, the control plane network element receives the query request sent by the AMF network element that serves the third party UE, and returns the SUPI of the target UE and the SUPI of the reference UE for the query request sent by the AMF to the AMF network element based on the mapping relationship between the application layer ID and the SUPI of the UE. Thus, for the case where the third party UE has to send a ranging service request to the target UE or the reference UE via a 5GC, the SUPI of the target UE and the SUPI of the reference UE may be used to understand and use the identifier of the target UE and the identifier of the reference UE provided by the third party UE, to implement processing of the signaling and data related to the ranging/SL positioning between the target UE and the reference UE.

In an embodiment, the method may also include:
establishing the mapping relationship between the application layer ID and the SUPI of the UE based on configuration of an operator; or,
establishing the mapping relationship between the application layer ID and the SUPI of the UE based on registration of the UE.

In some examples, a home network operator of the UE may configure the mapping relationship between the application layer ID and the SUPI of the UE on the control plane network element in advance.

In another example, during the registration of the UE, the AMF that serves the UE may register the application layer ID and the SUPI of the UE into the control plane network element, and the control plane network element may establish the mapping relationship between the application layer ID and the SUPI of the UE.

In a still another example, during a UE policy association establishment, the PCF network element may register the application layer ID and the SUPI of the UE into the control plane network element, and the control plane network element may establish the mapping relationship between the application layer ID and the SUPI of the UE.

If the PCF network element supports establishing the mapping relationship between the application layer ID and the SUPI of the UE, the PCF network element may serve as the control plane network element.

In an embodiment, there is a one-to-one mapping relationship or a many-to-one mapping relationship between an application layer ID and an SUPI of the same UE.

There may be one or more application layer IDs of the UE for the ranging/SL positioning. For one UE, in the case that there is only one application layer ID registered by the UE to the control plane network element, the control plane network element may establish the one-to-one mapping relationship between the application layer ID of the UE and the SUPI of the UE. In the case that there are multiple application layer IDs registered by the UE into the control plane network element, the control plane network element may establish the many-to-one mapping relationship between the application layer IDs and the SUPI of the UE.

In an embodiment, establishing the mapping relationship between the application layer ID and the SUPI of the UE based on the registration of the UE includes at least one of:
establishing the mapping relationship between the application layer ID of the UE and the SUPI of the UE based on a registration request message sent by the UE during the registration of the UE, in which the registration request message includes one or more application layer IDs of the UE with respect to different applications; or
establishing the mapping relationship between the application layer ID and the SUPI of the UE according to a UE policy container sent by the UE during a UE policy association establishment, in which the UE policy container includes one or more application layer IDs of the UE with respect to different applications.

In some examples, the control plane network element may be the GMLC network element, the NEF network element, or the PCF network element.

During the registration of the UE, the AMF that serves the UE receives the registration request message from the UE, in which the registration request message includes a ranging/SL positioning application layer ID as part of a "5GS mobility management capability (5GMM capability)" of the UE.

The AMF registers the mapping relationship between the SUPI and the ranging/SL positioning application layer ID of the UE into the control plane network element. The SUPI of the UE may be carried in the registration request message of the UE.

The control plane network element may store the mapping relationship between the SUPI of the UE and the ranging/SL positioning application layer ID of the UE, and return a response to the AMF that serves the UE.

In some examples, the control plane network element may be the GMLC network element or the NEF network element.

During the UE policy association establishment, the PCF receives an Npcf_UEPolicyControl create request, in which the UE policy container carried by the request includes the ranging/SL positioning application layer ID of the UE; and registers the relationship between the SUPI and the ranging/SL positioning application layer ID of the UE into the control plane network element. The control plane network element stores the mapping relationship between the SUPI and the ranging/SL positioning application layer ID of the UE, and returns the response to the PCF.

In an embodiment, the control plane network element includes:
a GMLC network element; or,
an NEF network element; or,
a PCF network element.

In embodiments of the disclosure, the mapping relationship between the application layer ID of the UE and the SUPI of the UE for the ranging/SL positioning may be stored in the GMLC network element, the NEF network element, or the PCF network element.

Embodiments of the disclosure provide a method for processing information, performed by a control plane network element. The method may include:
establishing a mapping relationship between an application layer ID of a UE for a ranging/SL positioning and an SUPI of the UE, in which the UE includes a target UE and a reference UE; and the SUPI of the UE is used to process a signaling, traffic, or user information related to the ranging/SL positioning between the target UE and the reference UE.

The UE participating in the ranging/SL positioning includes the target UE and the reference UE. The target UE and the reference UE may switch roles in the same ranging/SL positioning session.

For example, the UE participating in the ranging/SL positioning includes a first UE and a second UE. The first UE may be the target UE, and the second UE may be the reference UE. Alternatively, the first UE may be the reference UE and the second UE may be the target UE.

In some examples, the control plane network element may be a GMLC network element, an NEF network element, or a PCF network element.

The control plane network element stores the mapping relationship between the application layer ID and the SUPI of the UE in advance. There may be a one-to-one mapping relationship or a many-to-one mapping relationship between the application layer ID and the SUPI of the UE.

The application layer ID of the UE is used to the ranging/SL positioning.

There may be one or more application layer IDs of one UE, and each application layer ID of the UE respectively correspond to each application of the UE. The same application corresponds to different application layer IDs in different UEs.

The SUPI of the UE is a unique identifier assigned to each UE by a network operator in a wireless communication system.

The control plane network element may establish a mapping relationship in advance between one or more application layer IDs and the SUPI of the UE.

The SUPI of the UE is used to process the signaling, the traffic, or the user information related to the ranging/SL positioning between the target UE and the reference UE.

The signaling related to the ranging/SL positioning between the target UE and the reference UE is carried by a control plane, for example, the signaling may be: a signaling carrying a service request and/or a signaling carrying a service request response. The service request is used to request to obtain a ranging/SL positioning result of the target UE and the reference UE.

The traffic related to the ranging/SL positioning of the target UE and the reference UE is carried by a user plane.

The user information related to the ranging/SL positioning of the target UE and the reference UE may include: contract information, user privacy information and/or temporary information stored by an AMF that serves the target UE and the reference UE, etc.

With the method for processing information in embodiments of the disclosure, the control plane network element establishes the mapping relationship between the application layer ID of the UE for the ranging/SL positioning and the SUPI of the UE, in which the UE includes the target UE and the reference UE; and the SUPI of the UE is used to process the signaling, the traffic, or the user information related to the ranging/SL positioning between the target UE and the reference UE. Therefore, for the case where a third party UE has to send a ranging service request to the target UE or the reference UE via a 5GC, the SUPI of the target UE and the SUPI of the reference UE may be used to understand and use an identifier of the target UE and an identifier of the reference UE provided by the third party UE, to implement processing the signaling and data related to the ranging/SL positioning between the target UE and the reference UE.

In an embodiment, establishing the mapping relationship between the application layer ID of the UE for the ranging/SL positioning and the SUPI of the UE may include:
establishing the mapping relationship between the application layer ID and the SUPI of the UE based on configuration of an operator; or,
establishing the mapping relationship between the application layer ID and the SUPI of the UE based on registration of the UE.

FIG. 4 is a flow chart illustrating a method for processing information according to an exemplary embodiment. The method for processing information is performed by an AMF network element that serves a third party UE. As illustrated in FIG. 4, the method includes the following.

At step 401, a query request is sent to a control plane network element, in which the query request includes an application layer ID of a UE for ranging/SL positioning, in which the UE includes a target UE and a reference UE.

At step 402, an SUPI corresponding to the application layer ID of the UE returned by the control plane network element based on a mapping relationship between the application layer ID and the SUPI of the UE is received, in which the SUPI is used to process a signaling, traffic, or user information related to the ranging/SL positioning between the target UE and the reference UE.

The UE participating in the ranging/SL positioning includes the target UE and the reference UE. The target UE and the reference UE may switch roles in the same ranging/SL positioning session.

For example, the UE participating in the ranging/SL positioning includes a first UE and a second UE. The first UE may be the target UE and the second UE may be the reference UE. Alternatively, the first UE may be the reference UE and the second UE may be the target UE.

The third party UE may be a UE different from the target UE and the reference UE. The third party UE may request to obtain a ranging/SL positioning result of the target UE and the reference UE.

For example, in the case that a certain vehicle acting as the third party UE needs to obtain a relative location between two vehicles near the vehicle, the vehicle may initiate a service request to an AMF that serves the vehicle, to obtain the relative location between the two vehicles.

The AMF that serves the third party UE refers to a serving AMF of the third party UE.

In some examples, the AMF that serves the third party UE, an AMF that serves the target UE and an AMF that serves the reference UE may be the same or different.

In another example, the AMF that serves the third party UE may be the same as the AMF that serves the target UE, and the AMF that serves the third party UE may be different from the AMF that serves the reference UE.

In a still another example, the AMF that serves the third party UE may be the same as the AMF that serves the reference UE, and the AMF that serves the third party UE may be different from the AMF that serves the target UE.
the AMF that serves the third party UE may send the query request to the control plane network element, such as the GMLC network element, when receiving the service request sent by the third party UE, in which the query request includes the application layer ID of the target UE for the ranging/SL positioning and the application layer ID of the reference UE for the ranging/SL positioning.

In some examples, the control plane network element may be the GMLC network element, an NEF network element, or a PCF network element.

The control plane network element stores the mapping relationship between the application layer ID and the SUPI of the UE in advance. There may be a one-to-one mapping relationship or a many-to-one mapping relationship between the application layer ID and the SUPI of the UE. It may be understood that the control plane network element may obtain the mapping relationship between the application layer ID and the SUPI of the UE in other way, which is not limited in the disclosure.

The application layer ID of the UE is used to the ranging/SL positioning.

There may be one or more application layer IDs of one UE, and each application layer ID of the UE respectively corresponds to each application of the UE. The same application corresponds to different application layer IDs in different UEs.

The SUPI of the UE is a unique identifier assigned to each UE by a network operator in the wireless communication system.

The control plane network element may establish a mapping relationship in advance between one or more application layer IDs and the SUPI of the UE.

The SUPI of the UE is used to process the signaling, the traffic, or the user information related to the ranging/SL positioning between the target UE and the reference UE.

The signaling related to the ranging/SL positioning between the target UE and the reference UE is carried by a control plane, for example, the signaling may be: a signaling carrying the service request and/or a signaling carrying a service request response. The service request is used to request to obtain the ranging/SL positioning result of the target UE and the reference UE.

The traffic related to the ranging/SL positioning between the target UE and the reference UE is carried by a user plane.

The user information related to the ranging/SL positioning between the target UE and the reference UE may include: contract information, user privacy information and/or temporary information stored by the AMF that serves the target UE and the reference UE, etc.

In this embodiment, the AMF that serves the third party UE may initiate the query request into the control plane network element, in which the query request includes the application layer ID of the target UE and the application layer ID of the reference UE; determine whether the SUPI of the target UE and the SUPI of the reference UE exist by querying the mapping relationship between the application layer ID and the SUPI of the UE by the control plane network element; and if yes, receive a response result indicating that a query succeeds returned by the control plane network element, in which the response result includes the SUPI of the target UE and the SUPI of the reference UE.

In the case that the control plane network element fails in discovering the SUPI corresponding to the application layer ID of the target UE and/or the SUPI corresponding to the application layer ID of the reference UE, the AMF may receive a response result indicating that the query fails, returned by the control plane network element.

With the method for processing information in the embodiments of the disclosure, the control plane network element receives the query request sent by the AMF network element that serves the third party UE, and returns the SUPI of the target UE and the SUPI of the reference UE for the query request of the AMF to the AMF network element based on the mapping relationship between the application layer ID and the SUPI of the UE. Therefore, for the case where third party UE has to send a ranging service request to the target UE or the reference UE via a 5GC, the SUPI of the target UE and the SUPI of the reference UE may be used to understand and use an identifier of the target UE and an identifier of the reference UE provided by the third party UE, to implement processing the signaling and data related to the ranging/SL positioning of the target UE and the reference UE.

In an embodiment, there is a one-to-one mapping relationship or a many-to-one mapping relationship between an application layer ID and an SUPI of the same UE.

There may be one or more application layer IDs of the UE for the ranging/SL positioning. For one UE, in the case that there is only one application layer ID registered by the UE into the control plane network element, the control plane network element may establish the one-to-one mapping relationship between the application layer ID and the SUPI of the UE. In the case that there are multiple application layer IDs registered by the UE into the control plane network element, the control plane network element may establish the many-to-one mapping relationship between the application layer IDs and the SUPI of the UE.

In an embodiment, before sending the query request to the control plane network element, the method further includes:
receiving a first service request sent by the third party UE, in which the first service request includes an application layer ID of the target UE and an application layer ID of the reference UE.

In this embodiment, in the case that the third party UE needs to obtain the ranging/SL positioning result of the target UE and the reference UE, for the case where the third party UE does not find the target UE and the reference UE via the PC5, the third party UE may initiate the first service request to the AMF that serves the third party UE based on the 5GC network to request to obtain the ranging/SL positioning result of the target UE and the reference UE.

In an embodiment, the method also includes:
sending a second service request to an AMF network element that serves the target UE or the reference UE, in which the second service request includes the application layer ID of the target UE, the application layer ID of the reference UE, an SUPI of the target UE and an SUPI of the reference UE.

The AMF network element that serves the third party UE obtains an address of the AMF that serves the target UE or the reference UE by searching a unified data management (UDM) network element, and sends the second service request to the AMF that serves the target UE or the reference UE based on an obtained address of the AMF serving the target UE or the reference UE. The second service request includes the application layer ID of the target UE, the application layer ID of the reference UE, the SUPI of the target UE and the SUPI of the reference UE.

The AMF network element that serves the target UE is a serving AMF network element of the target UE. The AMF network element that serves the reference UE is a serving AMF network element of the reference UE.

In some examples, the serving AMF network element of the target UE and the serving AMF network element of the reference UE may be the same AMF network element or different AMF network elements.

In an embodiment, the method also includes:
receiving a service request response returned by the AMF that serves the target UE or the reference UE; and
forwarding the service request response to the third party UE, in which the service request response includes a ranging/SL positioning result of the target UE and the reference UE that is allowed to be provided to the third party UE.

After the second service request is received, the serving AMF of the target UE or the reference UE checks privacy information of the target UE and privacy information of the reference UE based on the SUPI of the target UE and the SUPI of the reference UE included in the second service request, to determine whether the third party UE is allowed to obtain ranging/SL positioning information of the target UE and the reference UE.

In the case that the privacy information of the target UE and the privacy information of the reference UE indicates allowing the third party UE to obtain the ranging/SL positioning information of the target UE and the reference UE, the serving AMF of the target UE or the reference UE may send a ranging/SL positioning service request to the target UE or the reference UE by a non-access-stratum (NAS), the ranging/SL positioning service request includes the application layer ID of the target UE and the application layer ID of the reference UE.

The target UE and the reference UE perform a ranging/SL positioning procedure to trigger measurement and a calculation of a result, and return the measurement and the calculation of the result to the serving AMF of the target UE or the reference UE, to cause the serving AMF of the target UE or the reference UE to return the service request response to the serving AMF network element of the third party UE. The service request response includes the ranging/SL positioning result of the target UE and the reference UE that is allowed to be provided to the third party UE.

The serving AMF of the third party UE forwards the service request response to the third party UE.

It needs to be noted that when the AMF that serves the third party UE is the same as the AMF network element that serves the target UE or the reference UE, steps that the AMF network element that serves the third party UE sends the second service request to the AMF network element that serves the target UE or the reference UE and receives the service request response returned by the AMF that serves the target UE or the reference UE may be omitted.

In an embodiment, the control plane network element includes:
a GMLC network element;
   or,
an NEF network element;
   or,
a PCF network element.

In embodiments of the disclosure, the mapping relationship between the application layer ID and the SUPI of the UE for the ranging/SL positioning may be stored in the GMLC network element, the NEF network element, or the PCF network element.

To further explain any of embodiments of the disclosure, several detailed embodiments are provided below.

The application layer ID, is an identifier identifying a ranging/SL positioning-enabled UE within a context of a specific application, and used by the third party UE to identify the target UE and the reference UE in the service request.

A 5GC NF (such as, a GMLC or an NEF) maintains a mapping table between the application layer ID and the SUPI of the UE. The mapping table may be pre-configured by the operator, or is registered by the UE during the registration or during the UE policy association establishment. For the latter case, there are two options for a registration of the application layer ID.

Option 1: during the registration, the UE includes the ranging/SL positioning application layer ID as part of a "5GMM capability" in the registration request message. In the case that the application layer ID is received, the AMF network element registers the application layer ID together with the SUPI of the UE into the 5GC NF, and the 5GC NF (such as the GMLC or the NEF) maintains the mapping table between the application layer ID and the SUPI of the UE for later use (when the UE is either the target UE or the reference UE in a ranging/SL positioning request).

Option 2: during the registration, the UE sends the UE policy container including the ranging/SL positioning application layer ID to the PCF. In the case that the application layer ID is received, the PCF registers the application layer ID together with the SUPI of the UE into the 5GC NF, and the 5GC NF (such as the GMLC or the NEF) maintains the mapping table between the application layer ID and the SUPI of the UE for later use (when the UE is either the target UE the or reference UE in the ranging/SL positioning request).

For the case where the third party UE has to send the ranging/SL positioning request to the target UE or the reference UE via a 5GC, when the AMF receives the ranging/SL positioning request from the third party UE, the AMF queries the mapping table maintained by the 5GC NF to retrieve an SUPI of a UE subject to the ranging/SL positioning based on an application layer ID included in the ranging/SL positioning request.

The GMLC taken as the control plane network element is descried as an example below.

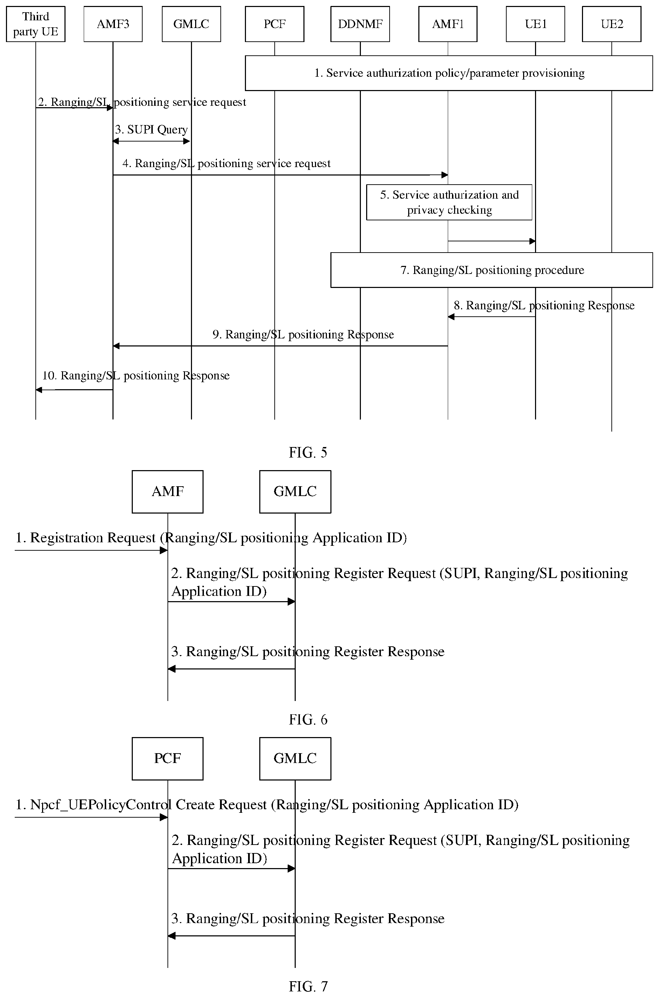

As illustrated in FIG. 5, embodiments of the disclosure provide a method for processing information, which is a network-based procedure for ranging/SL positioning initiated by third party UE.
1. Service authorization policies/parameters are provisioned to a UE1 and a UE2.
2. The third party UE failed in discovering the UE1 and the UE2 over a PC5. The third party UE sends a ranging/SL positioning service request including an application layer ID of the UE1, an application layer ID of the UE2, result content (a distance, an angle, or both the distance and the angle) and a required quality of service (QoS), etc., to a serving AMF network element of the third party UE, i.e. an AMF3.
3. The AMF3 queries a GMLC for an SUPI of the UE1 and an SUPI of the UE2 based on the application layer IDs.
4. The AMF3 checks a UDM to obtain a serving AMF of the UE1/UE2. In the case that a serving AMF address of the UE1, such as an AMF1, is retrieved, the AMF3 sends the ranging/SL positioning service request including an SUPI value of the UE1 or an SUPI value of the UE2 as well as the application layer IDs of the UE1/UE2, to the AMF1.
   NOTE 1: The AMF3 may retrieve a serving AMF address of the UE2. In this solution, the AMF1 represents an AMF that receives a service request sent by the AMF3.
5. The AMF1 checks privacy information of the UE1 and the UE2 based on the SUPI of the UE1 and the SUPI of the UE2, to determine whether the third party UE is allowed to have ranging/SL positioning information of the UE1 and the UE2.
6. The AMF1 sends the ranging/SL positioning service request including the application layer ID of the UE1 and the application layer ID of the UE2, to the UE1 over the NAS.
7. The UE1 initiates a ranging/SL positioning procedure to the UE2 to trigger measurement and a calculation of a result.
   NOTE 2: The ranging/SL positioning procedure includes a ranging/SL positioning discovery and a service operation. Whether a direct discovery name management function (DDNMF) is involved is determined by a solution developed under a KI#3.
8. The UE1 sends a response including a ranging/SL positioning result to the AMF1.
9. The AMF1 forwards the response including the ranging/SL positioning result to the AMF3.
10. The AMF3 forwards the response including the ranging/SL positioning result to the third party UE.

It may be understood that the above are described for the case where the AMF3 that serves the third party UE is different from the AMF1 that serves the UE1 or the UE2. In the case that the AMF3 is the same as the AMF1, a step that the AMF1 forwards the response including the ranging/SL positioning result to the AMF3 may be omitted.

As illustrated in FIG. 6, embodiments of the disclosure provide a method for processing information, which is a registration procedure for ranging/SL positioning between application layer ID and an SUPI initiated via an AMF.
1. The AMF receives a registration request message from a UE, the registration request message includes a ranging/SL positioning application layer ID as part of a "5GMM capability".
2. The AMF registers a relationship between an SUPI of the UE and a ranging/SL positioning application layer ID into a GMLC.
3. The GMLC stores the relationship between the SUPI of the UE and the ranging/SL positioning application layer ID, and responds the AMF.

NOTE: The GMLC may also be replaced by an NEF in an above procedure.

As illustrated in FIG. 7, embodiments of the disclosure provide a method for processing information, which is a registration procedure for ranging/SL positioning between an application layer ID and an SUPI initiated via a PCF.
1. The PCF receives an Npcf_UEPolicyControl create request during a UE policy association establishment, and a UE policy container carried in the Npcf_UEPolicyControl create request includes a ranging/SL positioning application layer ID of a UE.
2. The PCF registers a relationship between an SUPI and a ranging/SL positioning application layer ID of the UE into a GMLC.
3. The GMLC stores the relationship between the SUPI of the UE and the ranging/SL positioning application layer ID, and responds the PCF.

NOTE: The GMLC may also be replaced by an NEF in an above procedure.

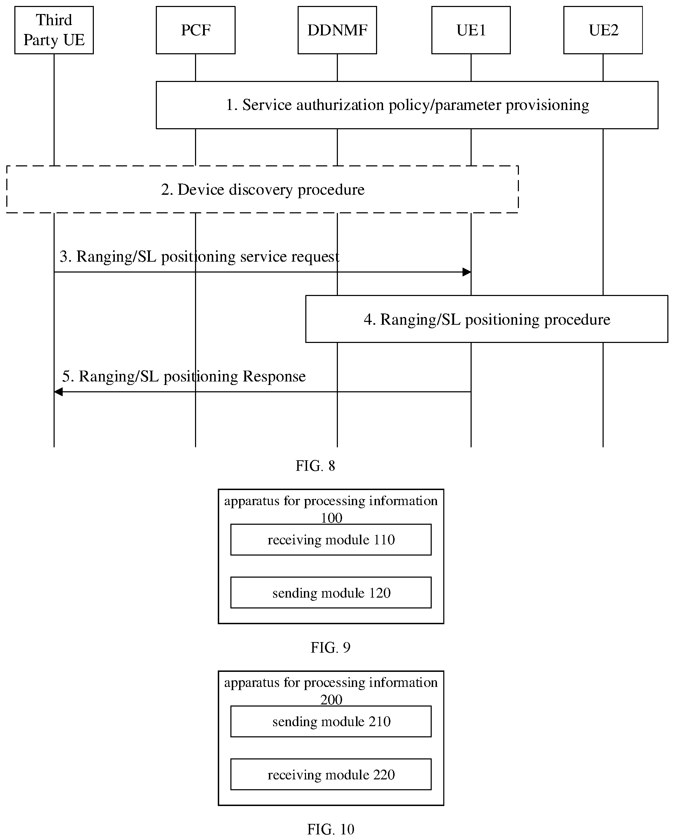

As illustrated in FIG. 8, embodiments of the disclosure provide a method for processing information, which a PC5-based procedure for ranging/SL positioning initiated by third party UE.
1. A Service authorization policy/parameter is provisioned to a UE1 and a UE2.
2. The third party UE initiates a device discovery procedure to discover either the UE1 or the UE2, and one of the UE1 or the UE2is successfully discovered, such the UE1. This step is skipped in the following:
   - communication between the third party UE and the UE1 exists; or
   - the third party UE and the UE1 are the same UE, i.e. a service request is initiated from an upper layer of the UE1.

   NOTE 1: It is also possible that the UE2 is discovered. In this solution, the UE1 represents the UE that the third party UE decides to send the service request to.
   NOTE 2: Device discovery follows a device discovery procedure of vehicle to everything (V2X) or proximity services (ProSe) or a device discovery procedure of the ranging/SL positioning.
3. The third party UE sends a ranging/SL positioning service request to the UE1, including an application layer ID of the UE1, an application layer ID of the UE2, result content (a distance, an angle, or both the distance and the angle) and a required quality of service (QoS), etc.
4. The UE1 initiates a ranging/SL positioning procedure to the UE2 to trigger measurement and a calculation of a result. The application layer ID of the UE1 and the application layer ID of the UE2 are used to the communication between the UE1 and the UE2 over the PC5.
   NOTE 3: The ranging/SL positioning procedure includes a ranging/SL positioning discovery and a service operation. Whether a DDNMF is involved is determined by a solution developed under a KI#3.
5. The UE1 sends a response including a ranging/SL positioning result of the UE1 and the UE2 to the third party UE.

FIG. 9 is a block diagram illustrating an apparatus for processing information according to an exemplary embodiment. The apparatus for processing information is applied to a control plane network element. As illustrated in FIG. 9, the apparatus 100 for processing information includes:
a receiving module 110, configured to receive a query request sent by an AMF network element that serves a third party UE, in which the query request includes an application layer ID of a UE for ranging/SL positioning, in which the UE includes a target UE and a reference UE; and
a sending module 120, configured to return an SUPI corresponding to the application layer ID of the UE to the AMF based on a mapping relationship between the application layer ID and the SUPI of the UE, in which the SUPI is used to process a signaling, traffic, or user information related to the ranging/SL positioning between the target UE and the reference UE.

In an embodiment, the apparatus also includes an establishing module, in which the establishing module is configured to execute one of:
establishing the mapping relationship between the application layer ID and the SUPI of the UE based on configuration of an operator; or,
establishing the mapping relationship between the application layer ID and the SUPI of the UE based on registration of the UE.

In an embodiment, there is a one-to-one mapping relationship or a many-to-one mapping relationship between an application layer ID and an SUPI of the same UE.

In an embodiment, the establishing module is configured to execute at least one of:
establishing the mapping relationship between the application layer ID and the SUPI of the UE based on a registration request message sent by the UE during the registration of the UE, in which the registration request message includes one or more application layer IDs of the UE with respect to different applications; or
establishing the mapping relationship between the application layer ID and the SUPI of the UE based on a UE policy container sent by the UE during a UE policy association establishment, in which the UE policy container includes one or more application layer IDs of the UE with respect to different applications.

In an embodiment, the control plane network element includes:
a GMLC network element;
   or,
an NEF network element;
   or,
a PCF network element.

FIG. 10 is a block diagram illustrating an apparatus for processing information according to an exemplary embodiment. The apparatus for processing information is applied to an AMF network element that serves a third party UE. As illustrated in FIG. 10, the apparatus 200 for processing information includes:
a sending module 210, configured to send a query request to a control plane network element, in which the query request includes an application layer ID of a target UE for ranging/SL positioning and an application layer ID of a reference UE for the ranging/SL positioning, in which the UE includes a target UE and a reference UE; and
a receiving module 220, configured to receive an SUPI corresponding to the application layer ID of the UE returned by the control plane network element based on a mapping relationship between the application layer ID and the SUPI of the UE, in which the SUPI is used to process a signaling, traffic, or user information related to the ranging/SL positioning between the target UE and the reference UE.

In an embodiment, there is a one-to-one mapping relationship or a many-to-one mapping relationship between an application layer ID and an SUPI of the same UE.

In an embodiment, the receiving module 220 is configured to:
receive a first service request sent by the third party UE, in which the first service request includes an application layer ID of the target UE and an application layer ID of the reference UE.

In an embodiment, the sending module 210 is configured to:
send a second service request to an AMF network element that serves the target UE or the reference UE, in which the second service request includes the application layer ID of the target UE, the application layer ID of the reference UE, an SUPI of the target UE and an SUPI of the reference UE.

In an embodiment, the receiving module 220 is configured to:
receive a service request response returned by the AMF that serves the target UE or the reference UE; and
the sending module 210 is configured to:
   forward the service request response to the third party UE, in which the service request response includes a ranging/SL positioning result of the target UE and the reference UE that is allowed to be provided to the third party UE.

In an embodiment, the control plane network element includes:
a GMLC network element;
   or,
an NEF network element;
   or,
a PCF network element.

Embodiments of the disclosure provide a communication system. The communication system includes: a control plane network element and an AMF network element, in which the AMF network element serves a third party UE.

The AMF is configured to send a query request to a control plane network element, in which the query request includes an application layer ID of a target UE for ranging/SL positioning and an application layer ID of a reference UE for the ranging/SL positioning.

The control plane network element is configured to receive a query request sent by the AMF network element that serves a third party UE, in which the UE includes a target UE and a reference UE.

The control plane network element is configured to return an SUPI corresponding to the application layer ID of the UE to the AMF network element based on a mapping relationship between the application layer ID and the SUPI of the UE network element, in which the SUPI is used to process a signaling, traffic, or user information related to the ranging/SL positioning between the target UE and the reference UE.

The AMF is configured to receive an SUPI of the UE returned by the control plane network element.

In an embodiment, the control plane network element is configured to:
establish the mapping relationship between the application layer ID and the SUPI of the UE based on configuration of an operator; or,
establish the mapping relationship between the application layer ID and the SUPI of the UE based on registration of the UE.

In an embodiment, there is a one-to-one mapping relationship or a many-to-one mapping relationship between an application layer ID and an SUPI of the same UE.

In an embodiment, the control plane network element is configured to at least one of:
establish the mapping relationship between the application layer ID and the SUPI of the UE based on a registration request message sent by the UE during the registration of the UE, in which the registration request message includes one or more application layer IDs of the UE with respect to different applications; or
establish the mapping relationship between the application layer ID and the SUPI of the UE based on a UE policy container sent by the UE during a UE policy association establishment, in which the UE policy container includes one or more application layer IDs of the UE with respect to different applications.

In an embodiment, the control plane network element includes:
a GMLC network element;
   or,
an NEF network element;
   or,
a PCF network element.

In an embodiment, the AMF is configured to:
receive a first service request sent by the third party UE, in which the first service request includes an application layer ID of the target UE and an application layer ID of the reference UE.

In an embodiment, the AMF is configured to:
send a second service request to an AMF network element that serves the target UE or the reference UE, in which the second service request includes the application layer ID of the target UE, the application layer ID of the reference UE, an SUPI of the target UE and an SUPI of the reference UE.

In an embodiment, the AMF is configured to:
receive a service request response returned by the AMF that serves the target UE or the reference UE; and
forward the service request response to the third party UE, in which the service request response includes a ranging/SL positioning result of the target UE and the reference UE that is allowed to be provided to the third party UE.

Embodiments of the disclosure provide a communication device, including:
a memory for storing instructions executable by a processor; and
the processor, respectively connected with the memory.

The processor is configured to implement the method for processing information of any one of above technical solutions.

The processor may include various types of storage mediums, which are non-transitory computer storage mediums which may continue to memorize information stored on after the communication device powers down.

The communication device includes a network element, and the network element may be the above the AMF network element or the control plane network element.

The processor may be connected to the memory via a bus, etc., for reading executable programs stored in the memory, for example, execute at least one of the methods for processing information illustrated in FIGs. 3 to 4.

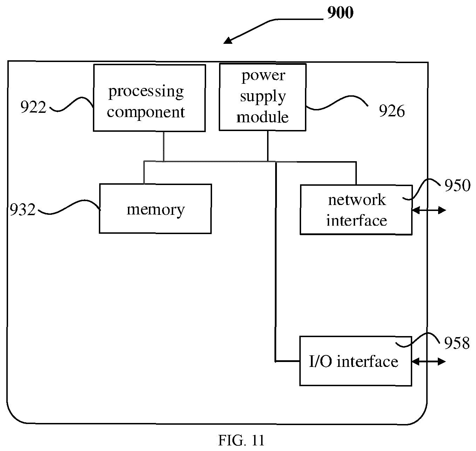

As illustrated in FIG. 11, an embodiment of the disclosure illustrates a structure of a network device. For example, the communication device 900 may be provided as a network device. The communication device may be the core network device mentioned above.

Referring to FIG. 11, the communication device 900 includes a processing component 922, which further includes one or more processors, and a memory resource represented by the memory 932 for storing instructions executable by the processing component 922, such as an application program. The application program stored in the memory 932 may include one or more modules, in which each module corresponds to a set of instructions. In addition, the processing component 922 is configured to execute instructions to execute any one of the above methods applied to the core network device.

The communication device 900 may also include a power supply component 926 configured to perform power management for the communication device 900, a wired or wireless network interface 950 configured to connect the communication device 900 to the network, and an input and output (I/O) interface 958. The communication device 900 may operate an operating system stored on the memory 932, such as a Windows Server TM, a Mac OS XTM, a UnixTM, a LinuxTM, a FreeBSDTM, and the like.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It may be understood that the disclosure is not limited to the precise structure described above and illustrated in accompanying drawings, and various modifications and changes may be made without going beyond the scope of the disclosure. Therefore, the protection scope of the disclosure shall be defined by the appended claims.

## Claims

1. A method for processing information, performed by a control plane network element, comprising:
receiving a query request sent by an access and mobility management function (AMF) network element that serves a third party user equipment (UE), wherein the query request comprises an application layer identifier (ID) of a UE for ranging/sidelink (SL) positioning, wherein the UE comprises a target UE and a reference UE; and
returning a subscriber permanent identifier (SUPI) corresponding to the application layer ID of the UE to the AMF based on a mapping relationship between the application layer ID and the SUPI of the UE, wherein the SUPI is used to process a signaling, traffic, or user information related to the ranging/SL positioning between the target UE and the reference UE.

2. The method of claim 1, further comprising:
establishing the mapping relationship between the application layer ID and the SUPI of the UE based on configuration of an operator; or,
establishing the mapping relationship between the application layer ID and the SUPI of the UE based on registration of the UE.

3. The method of claim 2, wherein there is a one-to-one mapping relationship or a many-to-one mapping relationship between an application layer ID and an SUPI of the same UE.

4. The method of claim 2 or 3, wherein establishing the mapping relationship between the application layer ID and the SUPI of the UE based on the registration of the UE comprises at least one of:
establishing the mapping relationship between the application layer ID of the UE and the SUPI of the UE based on a registration request message sent by the UE during the registration of the UE, wherein the registration request message comprises one or more application layer IDs of the UE with respect to different applications; or
establishing the mapping relationship between the application layer ID of the UE and the SUPI of the UE based on a UE policy container sent by the UE during a UE policy association establishment, wherein the UE policy container comprises one or more application layer IDs of the UE with respect to different applications.

5. The method of any one of claims 1 to 4, wherein the control plane network element comprises:
a gateway mobile location center (GMLC) network element;
or,
a network exposure function (NEF) network element;
or,
a policy control function (PCF) network element.

6. A method for processing information, performed by an access and mobility management function (AMF) network element that serves a third party user equipment (UE), comprising:
sending a query request to a control plane network element, wherein the query request comprises an application layer identifier (ID) of a UE for ranging/sidelink (SL) positioning, wherein the UE comprises a target UE and a reference UE; and
receiving a subscriber permanent identifier (SUPI) corresponding to the application layer ID of the UE returned by the control plane network element based on a mapping relationship between the application layer ID and the SUPI of the UE, wherein the SUPI is used to process a signaling, traffic, or user information related to the ranging/SL positioning between the target UE and the reference UE.

7. The method of claim 6, wherein there is a one-to-one mapping relationship or a many-to-one mapping relationship between an application layer ID and an SUPI of the same UE.

8. The method of claim 6 or 7, wherein before sending the query request to the control plane network element, the method further comprises:
receiving a first service request sent by the third party UE, wherein the first service request comprises an application layer ID of the target UE and an application layer ID of the reference UE.

9. The method of claim 8, further comprising:
sending a second service request to an AMF network element that serves the target UE or the reference UE, wherein the second service request comprises the application layer ID of the target UE, the application layer ID of the reference UE, an SUPI of the target UE and an SUPI of the reference UE.

10. The method of claim 9, further comprising:
receiving a service request response returned by the AMF that serves the target UE or the reference UE; and
forwarding the service request response to the third party UE, wherein the service request response comprises a ranging/SL positioning result of the target UE and the reference UE that is allowed to be provided to the third party UE.

11. The method of claims 6 to 10, wherein the control plane network element comprises:
a gateway mobile location center (GMLC) network element;
or,
a network exposure function (NEF) network element;
or,
a policy control function (PCF) network element.

12. An apparatus for processing information, applied to a control plane network element, comprising:
a receiving module, configured to receive a query request sent by an access and mobility management function (AMF) network element that serves a third party user equipment (UE), wherein the query request comprises an application layer identifier (ID) of a UE for ranging/sidelink (SL) positioning, wherein the UE comprises a target UE and a reference UE; and
a sending module, configured to return a subscriber permanent identifier (SUPI) corresponding to the application layer ID of the UE to the AMF based on a mapping relationship between the application layer ID and the SUPI of the UE, wherein the SUPI is used to process a signaling, traffic, or user information related to the ranging/SL positioning between the target UE and the reference UE.

13. An apparatus for processing information, applied to an access and mobility management function (AMF) network element that serves a third party user equipment (UE), comprising:
a sending module, configured to send a query request to a control plane network element, wherein the query request comprises an application layer identifier (ID) of a UE for ranging/sidelink (SL) positioning, wherein the UE comprises a target UE and a reference UE; and
a receiving module, configured to receive a subscriber permanent identifier (SUPI) corresponding to the application layer ID of the UE returned by the control plane network element based on a mapping relationship between the application layer ID and the SUPI of the UE, wherein the SUPI is used to process a signaling, traffic, or user information related to the ranging/SL positioning between the target UE and the reference UE.

14. A communication system, comprising:
a control plane network element, configured to implement the method for processing information of any one of claims 1 to 5; and
an access and mobility management function (AMF) network element, configured to implement the method for processing information of any one of claims 6 to 11.

15. A communication device, comprising:
a processor; and
a memory for storing instructions executable by the processor,
wherein the processor is configured to implement the method for processing information of any one of claims 1 to 11 when running the instructions.

16. A computer storage medium for storing a computer executable program, wherein when the executable program is executed by a processor, the method for processing information of any one of claims 1 to 11 is implemented.
